# EUROPEAN PATENT SPECIFICATION

(11) **EP 3 326 786 B1**
(45) Date of publication and mention of the grant of the patent: **19.08.2020**
(21) Application number: 17202904.3
(22) Date of filing: 21.11.2017
(51) Int. Cl.: B29C 64/268, B29C 64/153, B33Y 70/00

(54) **METHOD AND DEVICE FOR MANUFACTURING A SHAPED OBJECT**
VERFAHREN UND VORRICHTUNG ZUR HERSTELLUNG EINES GEFORMTEN OBJEKTS
PROCÉDÉ ET DISPOSITIF DE FABRICATION D'UN OBJET FORMÉ

(30) Priority: 28.11.2016 JP 2016230487
(43) Date of publication of application: 30.05.2018
(73) Proprietor: Ricoh Company, Ltd., Tokyo 143-8555 (JP)
(72) Inventor: KAMODA, Kiichi, Tokyo 143-8555 (JP); YAMASHITA, Yasuyuki, Tokyo 143-8555 (JP); SAITO, Akira, Tokyo 143-8555 (JP); IIDA, Sohichiroh, Tokyo 143-8555 (JP); HIGUCHI, Shinzo, Tokyo 143-8555 (JP); IWATSUKI, Hitoshi, Tokyo 143-8555 (JP); TAMOTO, Nozomu, Tokyo 143-8555 (JP); SUZUKI, Yasuo, Tokyo 143-8555 (JP)
(74) Representative: White, Duncan Rohan

(56) References cited:
- EP-A1- 1 280 654
- WO-A1-2015/192166
- WO-A1-2016/127521
- WO-A2-2009/135521
- US-A1- 2013 064 706
- US-A1- 2016 332 370
- US-A1- 2017 266 882
- "Optical System for High-Power Laser Sintering", , 30 June 2016 (2016-06-30), XP055435028, Retrieved from the Internet: URL:https://www.ilt.fraunhofer.de/content/ dam/ilt/en/documents/annual_reports/ar15/T F2/AR15_S66.pdf [retrieved on 2017-12-13]
- Anonymous: "Powder for selective laser melting - Inside Metal Additive Manufacturing", , 4 October 2014 (2014-10-04), XP055435030, Retrieved from the Internet: URL:http://www.insidemetaladditivemanufact uring.com/blog/the-role-of-super-powders-i n-slm [retrieved on 2017-12-13]
- Anonymous: "Diameter | Definition of diameter by Merriam-Webster", , 8 October 2015 (2015-10-08), XP055633328, Retrieved from the Internet: URL:https://web.archive.org/web/2015100800 2716/http://www.merriam-webster.com/dictio nary/diameter [retrieved on 2019-10-17]

## Description

### Technical Field

The present disclosure relates to a method of manufacturing a solid freeform fabrication object and a device for manufacturing a solid freeform fabrication object.

### Description of the Related Art

Powder bed fusion (PBF) methods include known methods such as a selective laser sintering (SLS) method of forming a solid freeform fabrication object with selective irradiation of laser beams and a selective mask sintering (SMS) method of applying laser beams in planar form using a mask.

A device employing the PBF method selectively irradiates a thin layer of powder of metal, ceramics, or resin with laser beams to melt and attach the powder to each other to form a layer thereof and repeats this layer-forming operation to laminate layers to obtain a solid freeform fabrication object (3D object).

In the case of using resin powder for the PBF method, while maintaining inner stress between the thin layers low and relaxing the stress, the layers of the resin powder supplied to a supply tank are heated to temperatures close to the softening point of the resin. Thereafter, the heated layer is selectively irradiated with laser beams to raise the temperature of the resin powder to the softening point or higher so that the resin powder is fused and attached to each other to conduct solid freeform fabrication.

WO2009-A-135521 discloses fibres for producing a moulded body consisting of individual interconnected layers, according to a solid freeform fabrication method. The invention also relates to a method for producing such fibres (509) and to a method for producing a moulded body (10; 517) formed in layers from such fibres.

"Optical systems for High-Power Laser Sintering", XP055435028 discloses the use of an optical system to adapt, both dynamically and variably, the beam diameter and the intensity distribution, for use in SLS A method according to the preamble of claim 1 is for example known from Document WO 2016/127521 A1.

### SUMMARY

The invention provides a method of manufacturing a solid freeform fabrication object as claimed in claim 1.

### BRIEF DESCRIPTION OF THE SEVERAL VIEWS OF THE DRAWINGS

Various other objects, features and attendant advantages of the present disclosure will be more fully appreciated as the same becomes better understood from the detailed description when considered in connection with the accompanying drawings in which like reference characters designate like corresponding parts throughout and wherein:
FIG. 1 is a graph illustrating a cross-section energy intensity distribution having a top hat-like form of laser beams used in an embodiment of the present disclosure;
FIG. 2 is a schematic diagram illustrating an example of the device for manufacturing a solid freeform fabrication object for use in the method of manufacturing a solid freeform fabrication object according to an embodiment of the present disclosure; and
FIG. 3 is a graph illustrating a cross-section energy intensity distribution of Gaussian distribution of laser beams.

### DETAILED DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc. in the present disclosure represent the same meaning, unless otherwise specified.

### Method of Manufacturing Solid Freeform Fabrication Object and Device for Manufacturing Solid Freeform Fabrication Object

The method of manufacturing a solid freeform fabrication object of the present disclosure includes forming a layer of resin powder for solid freeform fabrication including particles having a pillar-like form and solidifying a particular area of the layer with irradiation of laser beams, wherein the laser beams have an energy intensity distribution having a top hat-like form. The method may further optionally include other processes.

In typical method of manufacturing a solid freeform fabrication object, the energy intensity distribution of laser beams adopted in powder bed fusion (PBF) method is Gaussian distribution. When the powder layer is irradiated with laser beams, the behavior of melting of particles constituting powder fluctuates in the range of laser diameters. Specifically, even with the laser power condition under which the center of the laser irradiation portion is completely melted, it may occur that the particles present at sites distant from the center in an amount corresponding to the radius of the laser beams are not melted. The present disclosure is made based on this knowledge. As a result, the surface of a manufactured solid freeform fabrication object is textured because of the form of the particles maintained at the surface. The present disclosure is made based on this knowledge.

The device for manufacturing a solid freeform fabrication object of the present disclosure includes a device to form a layer of resin powder for solid freeform fabrication including particles having a pillar-like form and a device to solidify a particular area of the layer with irradiation of laser beams, wherein the laser beams have an energy intensity distribution having a top hat-like form. The device may include further optionally other devices.

In addition, the device for manufacturing a solid freeform fabrication object of the present disclosure preferably furthermore includes a device to convert the energy intensity distribution from Gaussian distribution to top hat-like form distribution.

The method of manufacturing a solid freeform fabrication object of the present disclosure can be suitably executed by the device for manufacturing a solid freeform fabrication object of the present disclosure.

### Laser Beams

The laser beams have an energy intensity distribution having a top hat-like form. Using the laser beams having an energy intensity distribution having a top hat-like form, the resin powder for solid freeform fabrication can be uniformly melted. As a consequence, a complex and fine solid freeform fabrication object can be obtained having a surface with less roughness of particle-like form so that the textured level of the surface of the solid freeform fabrication object is reduced. The top hat-like form means a significantly trapezoid form or is obtained by flattening the peak of a (single dimension) Gaussian distribution.

The wavelength of the laser beams is preferably from 1 to 30 µm, more preferably from 5 to 20 µm, and particularly preferably from 8 to 13 µm. When the wavelength is from 1 to 30 µm, solid objects can be fabricated with uniform energy intensity with no unmelted particles attached to the surface of the solid freeform fabrication object. Therefore, the arithmetic mean deviations of profiles of the surface of the solid freeform fabrication object can be reduced.

It is possible to install a lens system (device to convert a laser profile from Gaussian distribution into a top hat-like form distribution) capable of converting Gaussian distribution of a laser profile into a top hat-like form distribution onto an optical system of a laser light source having a Gaussian distribution generally employed in selective laser sintering (SLS) method or selective mask sintering (SMS) method to generate laser beams having an energy intensity distribution having a top hat-like form.

The lens system has no specific limit and can be suitably selected to suit to a particular application. For example, StarLite (manufactured by OPHIR) is usable.

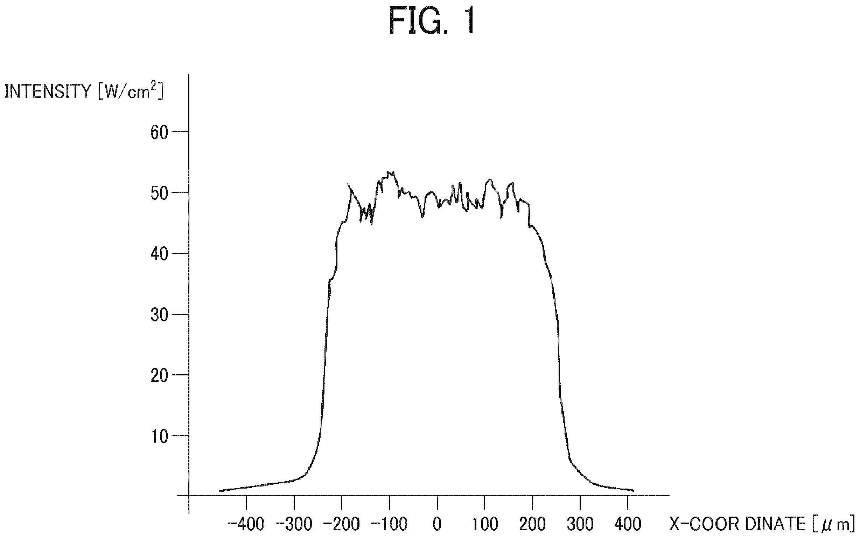

FIG. 1 is a graph illustrating a cross section intensity distribution of the laser beams for use in embodiments of the present disclosure. As illustrated in FIG. 1, the energy intensity distribution of the laser beams sharply rises at one end of a spot (X = around -250 µm). The value at around 50 W/cm² is kept constant for a while and thereafter sharply drops at the other end of the spot (X = about 250 µm). The local maximal value and the local minimal value of intensity around 50 W/cm² change depending on time.

The difference of the laser beams between the local maximal value and the local minimal value are preferably -40 to +40 percent, more preferably -10 to +10 percent, and particularly preferably -5 to +5 percent.

Due to laser beams having such uniform energy intensity distribution, quality of fabrication, in particular, arithmetic mean deviations of profiles of the surface of a solid freeform fabrication object can be significantly improved. Note that the energy intensity distribution can be measured by, for example, a laser profile measuring device (StarLite, manufactured by OPHIR).

### Process of Forming Layer and Device for Forming Layer

In the process of forming a layer, layers of resin powder for solid freeform fabrication containing particles having a pillar-like form are formed.

The device for forming a layer forms layers of resin powder for solid freeform fabrication containing pillar-like form particles.

The layer forming process can be suitably conducted by the layer forming device.

### Resin Powder for Solid Freeform Fabrication

The resin powder for solid freeform fabrication contains pillar-like form particles and other optional components.

The particle size distribution of the resin powder for solid freeform fabrication is generally 100 µm per layer due to the device employing PBF methods. The 50 percent cumulative volume particle diameter of the resin powder for solid freeform fabrication is from 1 to 200 µm and preferably from 5 to 100 µm and in terms of dimension stability particularly preferably from 5 to 50 µm. The 50 percent cumulative volume particle diameter can be measured by, for example, particle size distribution measuring device (microtrac MT3300 EXII, manufactured by MicrotracBEL Corp).

The ratio (Mv/Mn) of the volume average particle diameter (Mv) to the number average particle diameter (Mn) of the resin powder for solid freeform fabrication is preferably 2.00 or less, more preferably 1.50 or less, and particularly preferably 1.20 or less in terms of improvement of fabrication accuracy and recoating property. The ratio (Mv/Mn) can be measured by using a particle size distribution measuring instrument (microtrac MT3300EXII, manufactured by MicrotracBEL Corp.).

The melting point of the resin powder for solid freeform fabrication is preferably 100 degrees C or higher in terms of heatproof temperature at which the powder can be used as an exterior of a product. It is preferable to conduct fabrication employing PBF methods using resin powder for solid freeform fabrication satisfying those conditions.

The melting point in the present disclosure means the melting peak temperature measured according to ISO 3146 standard (plastic transfer temperature measuring method, JIS K7121 format). If there are multiple melting temperatures, the melting temperature on the high temperature side is used.

As the resin powder for solid freeform fabrication, typical resin powder obtained by pulverizing typical resin pellet is not usable because of severely controlled particle size distribution and thermal stability to heating unlike typical powder. If such typical resin powder is used, since density of packed particles is not sufficient, laser beams that have passed through space solidify an underlying layer or side layer (referred to as blocking) at many sites. This causes loss. In addition, after being melted by laser beams, a quantity amount of hollow walls are still left as are so that sintering swelling occurs, thereby reducing the density of a solid freeform fabrication object. This causes significant degradation of dimension accuracy and significant deterioration of strength, which causes a practical problem. The resin powder for solid freeform fabrication for use in the present disclosure prevents strength of an object fabricated by PBF method from being inferior to that of an injection-molded object or an extrusion molded object.

### Pillar-like Form Particle

The form of the pillar-like form particle is preferably a significantly cylindrical form. When the pillar-like form particle having a significantly cylindrical form is irradiated with laser beams having a top hat-like form intensity distribution, the arithmetic mean deviations of profiles of an obtained solid freeform fabrication object can be significantly reduced.

The pillar-like form particle preferably has significantly circular planes facing each other. The diameter of the significantly circular planes is preferably from 1 to 200 µm and more preferably from 5 to 100 µm. The distance (height) therebetween is preferably from 1 to 200 µm and more preferably from 5 to 100 µm.

The planes facing each other may have an incline. However, it is preferable that they are parallel to each other without an incline in terms of productivity and stability of laser fabrication.

An ellipse form or partially chipped-off form can be the significantly circular form. Also, the size of the circular planes facing each other may not be exactly the same. However, if the large circular plane is compared with the small circular plane, the ratio (large plane/small plane) of the diameter of the circle of the large plane to the diameter of the circle of the small plane is 1.5 at maximum. In terms of increasing density, the ratio is preferably 1,1 or less. In addition, from a similar point of view, true circular forms are preferable.

The side forming the distance (height) between the planes includes that in a crushed state (barrel-like form) appearing when the resin is cut and softens. However, since space appears between particles having arcs, the side is preferably straight in terms of more dense packing of powder.

As the distance (height) between the significantly circular planes facing each other, 50 percent cumulative volume particle diameter is preferably from 1 to 200 µm and more preferably from 5 to 100 µm. In particular, collective entity of powder having a uniform height and a form close to mono-dispersion with no deviation about the form and size is particularly preferable. The 50 percent cumulative volume particle diameter can be measured by, for example, particle size distribution measuring device (microtrac MT3300 EXII, manufactured by MicrotracBEL Corp).

The pillar-like form particle has no specific limit and can be suitably selected to suit to a particular application. For example, crystalline thermoplastic resins are preferable.

Specific examples of the crystalline thermoplastic resin include, but are not limited to, polymers such as polyolefin, polyamide, polyester, polyether, polyphenylene sulfide, a liquid crystal polymer (LCP), polyacetal (POM, melting point: 175 degrees C), polyimide, and a fluorochemical resin. These can be used alone or in combination. The crystalline thermoplastic resin may include additives such as flame retardants, plasticizers, heat stabilizing agents, and crystal nucleating agents and polymer particles such as non-crystalline resins other than the polymers mentioned above. These can be used alone or in combination. The polymer particles can be mixed. Also, it is also possible to coat the surface of the polymer particle with the polymer particle.

Specific examples of the polyolefin include, but are not limited to, polyethylene and polypropylene (PP, melting point: 130 degrees C). These can be used alone or in combination.

Specific examples of the polyamide include, but are not limited to, polyamide 410 (PA410), polyamide 6 (PA6), polyamide 66 (PA66, melting point: 265 degrees C), polyamide 610 (PA610), polyamide 612 (PA612), polyamide 11 (PA11), polyamide 12 (PA12), semi-aromatic polyamide 4T (PA4T), polyamide MXD6 (PAMXD6), polyamide 6T (PA6T), polyamide 9T (PA9T), and polyamide 10T (PA10T). These can be used alone or in combination. PA9T is also referred to as polynonamethylene terephthal amide constituted of a diamine having 9 carbon atoms and a terephthalic acid monomer. In general, since carbon acid side is an aromatic series, PA9T is also referred to as semi-aromatic series. Moreover, aramid, which is constituted of p-phenylenediamine and a terephathalic acid monomer and in which diamine side is also aromatic is included as the polyamide in the present disclosure. It is also suitable to use polyamide having two melting peaks such as PA9T (it is necessary to raise the temperature of a resin to the second melting peak or higher to completely melt the resin).

Specific examples of the polyester include, but are not limited to, polyethyleneterephthalate (PET, melting point: 260 degrees C), polybutadiens terephthalate (PBT, melting point: 225 degrees C), and polylactic acid (PLA). To impart heat resistance, polyester including aromatic series partially including terephthalic acid and isophthalic acid is also suitably used in the present disclosure.

Specific examples of polyether include, but are not limited to, polyether etherketone (PEEK, melting point: 334 degrees C), polyetherketone (PEK), polyether ketone ketone (PEKK), polyaryl ether ketone (PAEK), polyether ether ketone ketone (PEEKK), and polyetherkeone ether ketone ketone (PEKEKK). In addition to the polyether mentioned above, crystalline polymers are also suitable. Specific examples include, but are not limited to, polyacetal, polyimide, and polyether sulfone.

### Other Components

There is no specific limitation to the selection of the other components. A suitable component can be suitably selected to suit to a particular application. Specific examples include, but are not limited to, a fluidizer, a granulating agent, a toughening agent, and an antioxidant.

For example, particulate inorganic material having a volume average particle diameter of less than 10 µm can be suitably used as the fluidizer.

The proportion of the fluidizer is sufficient if it covers the surface of particles and preferably from 0.1 to 10 percent by mass to the total content of resin powder for solid freeform fabrication.

Specific examples of the granulating agent include, but are not limited to, articles using at least one of alumina, talc, glass-like silica, titania, hydrated silica, silica having a surface modified by a silane coupling agent, and magnesium silicate.

As the toughening agent, glass filler, glass bead, carbon fiber, aluminum balls, and articles listed in the pamphlet of WTO 2008/057844 are used to improve strength. These can be used alone or in combination.

Examples of the other components are hydrazine-based agents of metal chelate, triadine based agents as ultraviolet absorber, hindered phenol-based agents as radical supplement agent, and phosphate-based as antioxidant. These can be used alone or in combination.

It is preferable to use suitably-dried resin powder as the resin powder for solid freeform fabrication of the present disclosure. Using a vacuum drier or silica gel is suitable to dry the resin powder before usage.

In addition, the resin powder for solid freeform fabrication can be used in the SLS method or SMS method and has properties striking a balance between parameters such as particle size and/or particle size distribution, heat transfer properties, melt viscosity, bulk density, flowability, melting temperature, and recrystallization temperature.

To promote the degree of laser sintering in the PBF method, the bulk density of the resin powder for solid freeform fabrication is preferably large although the density of the resin varies. For example, it is preferably 0.35 g/mL or greater, more preferably 0.40 g/mL or greater, and particularly preferably 0.5 g/mL or greater as tap density.

A solid freeform fabrication formed by laser sintering using the resin powder for solid freeform fabrication is smooth and has a surface having a resolution sufficient to indicate minimum orange peel or less. The orange peel generally means existence of surface deficiency such as unsuitable coarse surface or voids or warping on the surface of a solid freeform fabrication object formed by laser sintering according to the PBF method. The void has a significant impact on, for example, aesthetic appearance and mechanical strength.

Furthermore, it is preferable that solid freeform fabrication objects formed by laser sintering using the resin powder for solid freeform fabrication be free of unsuitable process properties such as warping and distortion due to phase changes and fuming from sintering to cooling after sintering.

The pillar-like form particle contained in the resin powder for solid freeform fabrication can be obtained by a method in which fiber having a significantly cylindrical form is prepared and thereafter cut to directly obtain the significantly cylindrical form. Alternatively, it can be obtained by preparing a cubic form from film-like form followed by post-processing.

Melted resin for solid freeform fabrication is extruded in fibrous form to prepare the fiber by an extruder during stirring at temperatures 30 degrees C or greater higher than the melting point. The melted resin is extended to around 1/1 to around 1/10 to obtain the fiber. The form of the cross section of the fiber can be determined by the form of the nozzle of the extruder. In the present disclosure, since the cross section is significantly circular, the nozzle orifice is preferably circular.

High dimension accuracy of the fiber reads better. The error of the dimension accuracy is preferably 10 percent or less in the radius of the circular form of the plane portion. Productivity increases in proportion to the number of nozzles.

As for cutting, a cutting machine employing guillotine method in which both the upper edge and the lower edge are blades or a cutting machine employing a straw cutter method of cutting with an upper edge with a board disposed on the bottom side instead of a blade can be used. The fiber can be directly cut to 0.01 to 0.1 mm by such a device. Alternatively, it is possible to use CO₂ laser, etc. for cutting. The pillar-like form particle can be directly obtained according to those methods.

It is preferable to use the resin powder for solid freeform fabrication containing only the pillar-like form particle. A combinational use of the pillar-like form particle with typical pulverization particles is also allowed. In order to improve density, the pillar-like form particle accounts for 50 percent or more of the resin powder for solid freeform fabrication.

As for the pulverization particle, for example, material having a pellet form, etc. is pulverized by a pulverizer at room temperature and thereafter classified by a filter, etc. to obtain particles having a diameter within a target range.

The pulverization temperature is preferably room temperature (25 degrees C), more preferably low temperatures of 0 degrees C or lower (brittle temperature of each resin or lower), furthermore preferably -25 degrees C or lower, and particularly ultralow temperatures of -100 degrees C or lower.

### Solidifying Process and Solidifying Device

In the solidifying process, a particular area of the layer is solidified upon irradiation of laser beams.

The particular area of the layer is solidified by the solidifying device upon irradiation of laser beams.

The solidifying process can be conducted by the solidifying device.

It is preferable to conduct sintering every time a new powder layer is pressed by a roller to fabricate a solid freeform object from the resin powder for solid freeform fabrication of the present disclosure.

In the sintering process, the powder layer portion is selectively melted. The new powder layer is formed on the previously formed layer and selectively melted again. This operation is repeated until a target solid freeform fabrication object is manufactured.

The method of manufacturing a solid freeform fabrication object of the present disclosure may employ selective mask sintering (SMS) technology. The SMS process is described in, for example, US Patent No. 6,531,086.

In the SMS process, a shielding mask selectively shields infrared rays so that the powder layer is partially and selectively irradiated. When utilizing the SMS process to manufacture an article from the resin powder for solid freeform fabrication, it is preferable to contain at least one kind of material to enhance infrared absorption of the resin powder for solid freeform fabrication. The resin powder for solid freeform fabrication may contain at least one kind of heat absorbent and/or dark color material (such as carbon fiber, carbon black, carbon nanotube, and cellulose nanofiber).

To manufacture a solid freeform fabrication object by the PBF method using the resin powder for solid freeform fabrication, it is preferable to laminate multiple layers having a polymer matrix and sintered layers attached to each other.

The sintered layer preferably has a thickness suitable for the fabrication process. The average thickness of the sintered layers is preferably 10 µm or greater, more preferably 50 µm or greater, and particularly preferably 100 µm or greater. The average thickness of the sintered layers is preferably less than 200 µm, more preferably less than 150 µm, and particularly preferably less than 120 µm.

The resin powder for solid freeform fabrication can be suitably used to form articles used as prototypes of electronic device parts, vehicle parts, and prototypes for strength test, and low volume products for use in aerospace or dress up tools for the auto industry. Methods other than the PBF method are expected to manufacture objects having excellent strength in comparison with FDM and inkjet methods, so that objects manufactured by such methods can be practically used. The production speed is not on par with mass production such as injection molding, etc. However, for example, it is possible to obtain required amount of production by manufacturing a massive amount of small parts in a two-dimensional manner. In addition, the method of manufacturing a solid freeform fabrication object by PBF method for use in the present disclosure obviates the need for dies unlike injection molding. Therefore, overwhelming cost reduction and short delivery time van be achieved when manufacturing prototypes.

The arithmetic mean deviations of profiles Ra of a solid freeform fabrication object obtained by the method of manufacturing a solid freeform fabrication object of the present disclosure is not particularly limited and can be suitably determined to suit to a particular application. It is preferably from 0.5 to 100 µm, more preferably from 0.5 to 60 µm, furthermore preferably from 0.5 to 10 µm, and particularly preferably from 0.6 to 2 µm. The arithmetic mean deviations of profiles Ra can be measured according to ISO 1302 standard (JIS B0031 format) by using, for example, VR3200 (manufactured by KEYENCE CORPORATION).

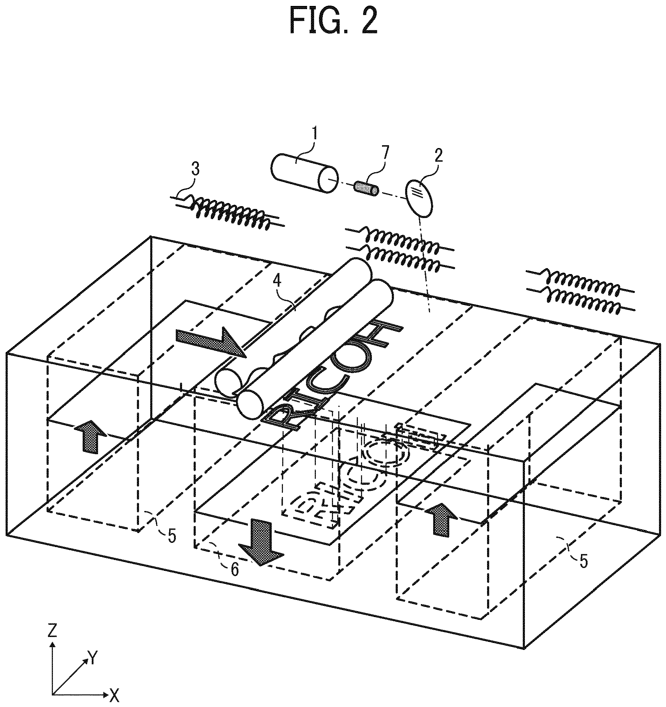

The device for manufacturing a solid freeform fabrication object is described referring to FIG. 2. FIG. 2 is a schematic diagram illustrating an example of the device for manufacturing a solid freeform fabrication object for use in the method of manufacturing a solid freeform fabrication object of the present disclosure.

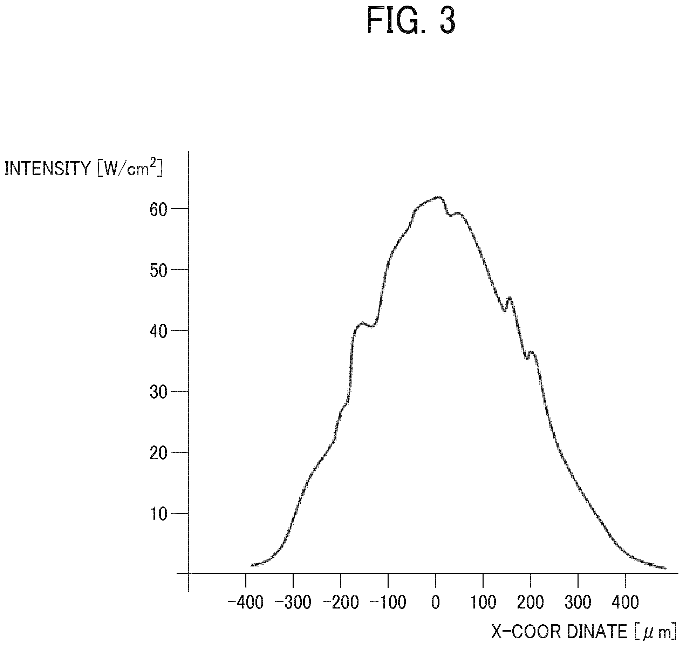

As illustrated in FIG. 2, powder is stored in a supplying tank 5 for powder and supplied to a laser beam scanning space 6 using a roller 4 in proportion to the usage amount. It is preferable that the temperature of the supply tank 5 be controlled by a heater 3. The laser beams having laser profiles of a Gaussian distribution as illustrated in FIG. 3 are output by an electromagnetic irradiation source 1 and converted into laser beams having laser profiles of a top hat-like form distribution using a lens system 7. The laser beam scanning space 6 is irradiated with the converted laser beams using a reflection mirror 2. The powder is sintered with the heat of the laser beams to obtain a solid freeform fabrication object.

The device for manufacturing a solid freeform fabrication object has no particular limit. The temperature of the supply tank 5, part bed temperature in the laser beam scanning space 6, the laser power, and the laser scanning distance can be suitably selected to suit to a particular application.

The temperature of the supply tank 5 is preferably 10 degrees C or more lower than the melting point of the powder for solid freeform fabrication.

The part bed temperature in the laser beam scanning space 6 is preferably from 3 to 20 degrees C higher than the melting point of the resin powder for solid freeform fabrication and also a low temperature of from 5 to 20 degrees C.

The power of the laser has no particular limit and can be suitably selected to suit to a particular application. For example, it is preferably from 10 to 150 W.

The laser scanning distance has no particular limit and can be suitably selected to suit to a particular application. For example, it is preferably from 0.1 to 0.8 mm and more preferable from 0.40 to 0.60 mm.

### Solid Freeform Fabrication Object

The solid freeform fabrication object is made of laser-sintered powder manufactured by the method of manufacturing a solid freeform fabrication object of the present disclosure.

The arithmetic mean deviations of profiles Ra of the solid freeform fabrication object is not particularly limited and can be suitably selected to suit to a particular application. For example, it is preferably from 0.5 to 100 µm, more preferably from 0.5 to 60 µm, furthermore preferably from 0.5 to 10 µm, and particularly preferably from 0.6 to 2 µm. The arithmetic mean deviations of profiles Ra can be measured according to ISO 1302 standard (JIS B0031 format) by using, for example, VR3200 (manufactured by KEYENCE CORPORATION).

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

Next, embodiments of the present disclosure are described in detail with reference to Examples but not limited thereto.

The 50 percent cumulative volume particle diameter (D50) of the resin powder for solid freeform fabrication and the melting pint of the resin powder for solid freeform fabrication were measured in the following manner.

The 50 percent cumulative volume particle diameter (D50) was measured by using a particle size distribution measuring instrument (microtrac MT3300EXII, manufactured by MicrotracBEL Corp.).

### Melting Point of Resin Powder for Solid Freeform Fabrication

The melting point was measured based on ISO 3146 standard (plastic transfer temperature measuring method, JISK 7121 format).

### Preparation Example 1 of Resin Powder for Solid Freeform Fabrication

### Manufacturing of PBT Powder of Significantly Cylindrical Form

Using an extruder, polybutylene terephthalate (PBT) resin (NOVADURAN® 5020, melting point of 225 degrees C, glass transition temperature of 43 degrees C, manufactured by Mitsubishi Engineering-Plastics Corporation) was stirred at a temperature 30 degrees C higher than the melting point and thereafter resin melted matter for solid freeform fabrication was extruded in fibrous form using a nozzle having an orifice of a circular form. The number of fibers extruded from the nozzle was 100. The melted matter was extended about three times to obtain a fiber having a diameter of 60 µm with an accuracy of -4 to +4 µm. Thereafter, using a cutting machine (NJ series 1200 type, manufactured by OGINO SEIKI CO., LTD.) employing a straw cutter method, the fiber was cut at 0.8 mm to obtain PBT powder. The cross section was observed by a scanning electron microscope (FlexSEM 1000, manufactured by Hitachi High-Technologies Corporation) with a magnifying power of 300 x after the cutting. The fiber was cleanly cut and the cut surfaces thereof were parallel to each other. In addition, the height of the cylinder (pillar-like form) was measured. The fiber was cut with an accuracy of from 50 to 70 µm. No particle were crushed at the cutting. 50 percent cumulative volume particle diameter of the PBT powder was 55 µm.

### Preparation Example 2 of Resin Powder for Solid Freeform Fabrication

### Manufacturing of PA12 Powder of Significantly Cylindrical Form

Powder (Vestsint 2162 natural, melting point of about 181 degrees C, manufactured by Daicel-Evonik Ltd.) available on the market having a grade for SLS was used as the PA12 powder. The form of the PA12 powder was checked in the same manner as in Preparation Example 1 of resin powder for solid freeform fabrication and found to be spherical. In addition, 50 percent cumulative volume particle diameter of the PA12 powder was 45 µm.

### Preparation Example 3 of Resin Powder for Solid Freeform Fabrication

### Manufacturing of PA6 Powder

A thermoplastic resin pellet (UNITIKA nylon 6 A1030BRT, melting point of about 225 degrees C, manufactured by UNITIKA LTD.) of standard grade for extrusion molding was subject to frost shattering at -200 degrees C to obtain powder as PA6 powder. The powder after frost shattering was processed to have a width of from 5 to 100 µm. The 50 percent cumulative volume particle diameter was from 20 to 90 µm.

To improve flowability of the powder, 1 percent by mass fumed silica (RA 200 H, manufactured by Evonik Resource Efficiency GmbH) and 0.5 percent by mass zinc stearate (manufactured by KAWAMURA KASEI INDUSTRY CO., LTD.) were admixed with the powder to obtain uniform compound powder. The thus-obtained powder was determined as unused powder. 50 percent cumulative volume particle diameter was 55 µm.

### Examples 1 and 2 and Comparative Examples 1 to 5

### Manufacturing of Solid Freeform Fabrication Object

Using an SLS manufacturing device (AM S5500P, manufactured by Ricoh Company Ltd.), a solid freeform fabrication object was manufactured from the powder for solid freeform fabrication shown in Table 1. The manufacturing conditions were as follows:
Average layer thickness: 0.1 mm
Laser power: about 10 to about 150 watt
Laser scanning distance: 0.48 mm
Fabrication temperature (powder surface temperature of fabrication tank): 3 to 20 degrees C lower than the melting point of the resin powder.

These conditions were affected by the thermal properties of the resin powder and environment of installation site (temperature and humidity). Accordingly, it is necessary to suitably adjust each parameter for each SLS device. During laser irradiation, there was no particular emission of smoke. Also, obtained resolution was good and no warping was observed. Therefore, the above-identified conditions were determined as suitable for each of Examples and Comparative Examples. Moreover, since fabrication was possible under these suitable laser fabrication conditions, these were considered as suitable for the powder for SLS fabrication. The form of the solid freeform fabrication object was a cube of 10 mm.

### Forming of Laser Beams Having Laser Intensity Distribution Having Top Hat-like Form

The laser light source used was CO₂ laser (Firestar Ti60, laser wavelength of 10.6 µm, manufactured by SYNRAD) or Nd-YAG laser (LOTIS TII, laser wavelength of 1.06 µm, manufactured by Tokyo Instruments, Inc.). Firestar Ti60 was permanent installation facility. When using Nd-YAG laser, the laser light source was replaced with LOTIS TII. The intensity distribution of laser beams emitted from both laser light sources has a Gaussian distribution (FIG. 3).

Ahead of the laser light source in the optical system inside the device was disposed a lens system (piShaper, manufactured by AdlOptica GmbH) to convert the intensity distribution of the laser beams into a top hat-like form. The energy intensity distribution of the converted laser beams when a powder layer in the fabrication chamber was irradiated was measured using a laser profile measuring device (StarLite, manufactured by OPHIR). FIG. 1 is a graph illustrating the intensity distribution of laser beams for use in fabrication based on the method described above. The laser beam had a diameter of about 240 µm.

Using the thus-obtained solid freeform fabrication object, "arithmetic mean deviations of profiles Ra of solid freeform fabrication object" was measured and "fabrication accuracy" was evaluated.

### Measuring of Arithmetic Mean Deviations of Profiles Ra of Solid Freeform Fabrication Object

The arithmetic mean deviations of profiles Ra of the side surface of the fabricated solid freeform fabrication object was measured according to ISO 1302 standard (JIS B 0031 format). The measuring device was VR3200, manufactured by KEYENCE CORPORATION. The arithmetic mean deviations of profiles Ra was the average of five measuring results, which was determined as experimental value. In addition, as the value of the arithmetic mean deviations of profiles decreases, the level of textured surface of the solid freeform fabrication object lowers.

### Fabrication Accuracy

The thus-obtained solid freeform fabrication object was observed to evaluate the fabrication accuracy based on the following evaluation criteria.

### Evaluation Criteria

A: The obtained solid freeform object has a smooth and aesthetic surface with no warp
B: Surface of the obtained solid freeform object has slight distortion and slight warpage
C (Poor): Surface of the obtained solid freeform object has distortion and significant warpage

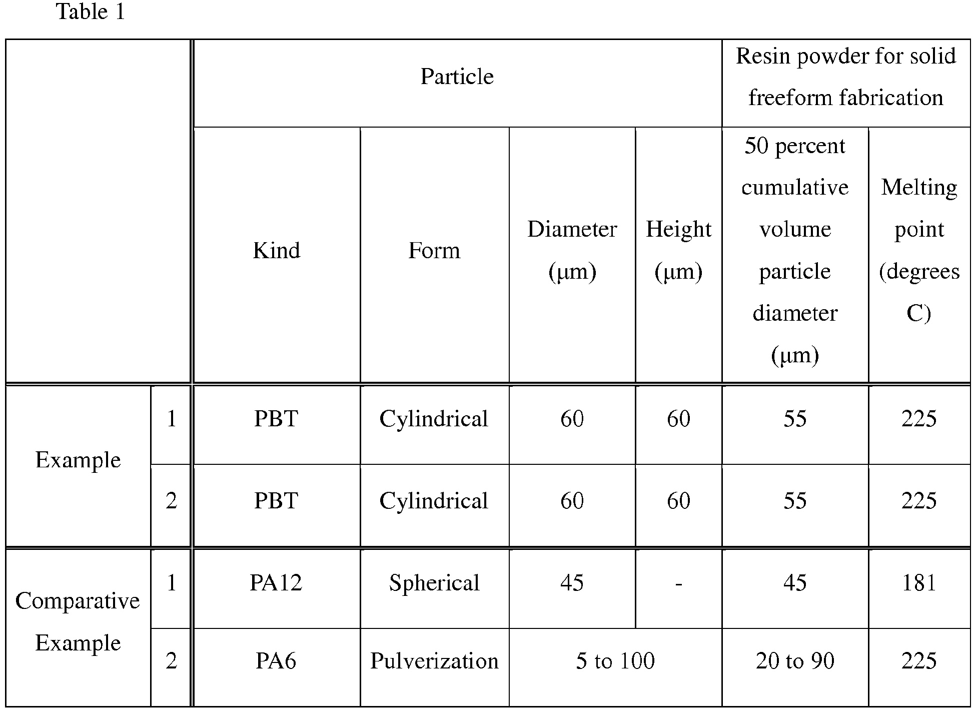

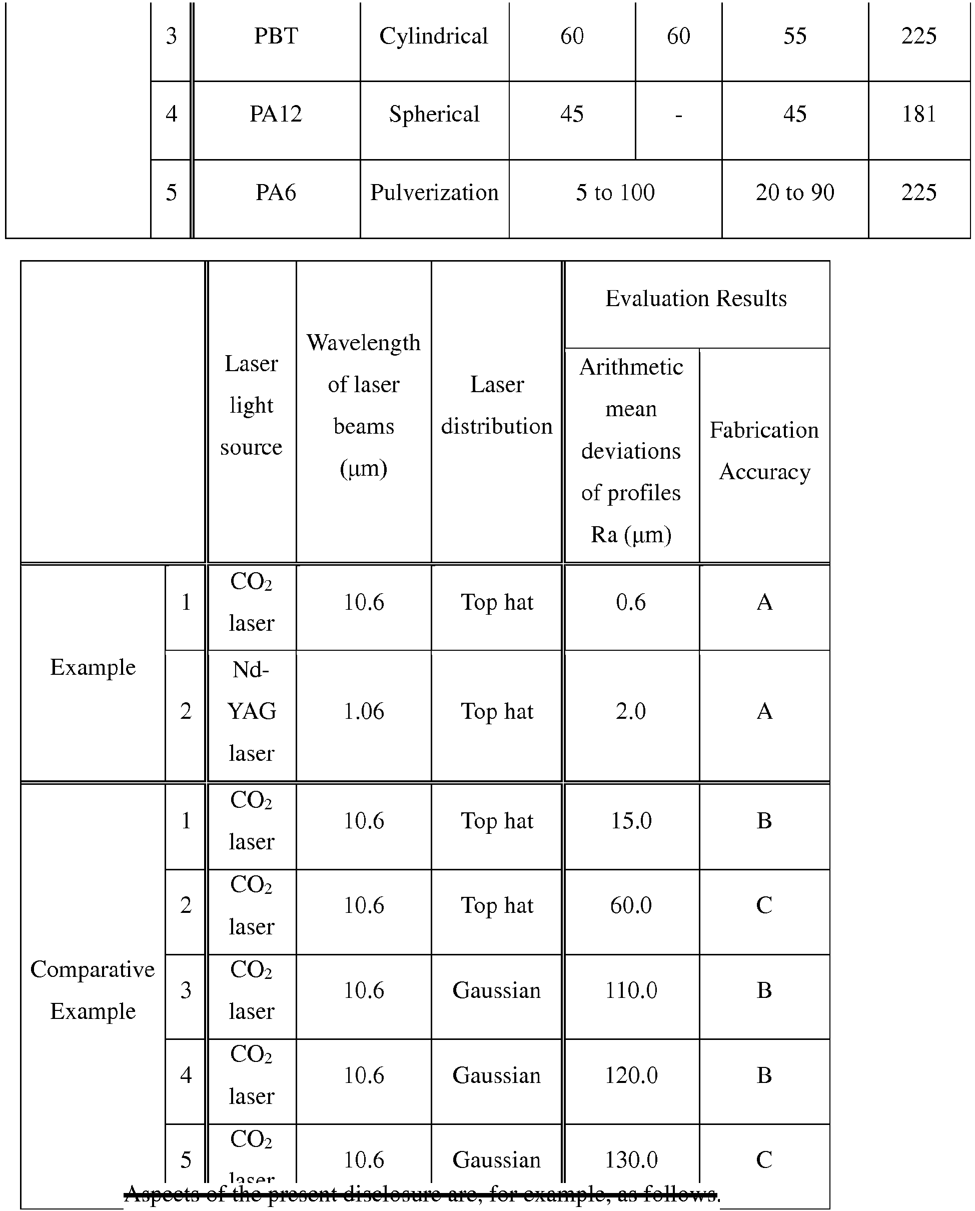

According to the present invention, a method of manufacturing a solid freeform fabrication (three-dimensional) object is provided by which a complex and fine solid freeform fabrication object can be simply and efficiently manufactured while reducing textured level of the surface of the solid freeform fabrication object.

Having now fully described embodiments of the present disclosure, it will be apparent to one of ordinary skill in the art that many changes and modifications can be made thereto without departing from the scope of the invention, which is defined by the claims.

## Claims

1. A method of manufacturing a solid freeform fabrication object comprising:
forming a layer of resin powder for solid freeform fabrication including particles having a pillar-like form; and
solidifying a particular area of the layer with irradiation of laser beams;
**characterized in that** the laser beams have an energy intensity distribution having a top hat-like form and wherein the ratio of the volume average particle diameter to the number average particle diameter of the resin powder for solid freeform fabrication is 2.00 or less, the ratio of the volume average particle diameter to the number average particle diameter of the resin powder for solid freeform fabrication being measurable by a microtrac MT3300EXII particle size distribution measuring device.

2. The method according to claim 1, wherein the pillar-like form is a significantly cylindrical form.

3. The method according to claim 1 or 2, wherein the laser beams have a wavelength of from 1 to 30 µm.

4. The method according to claim 3, wherein the wavelength is from 5 to 20 µm.

5. The method according to claim 4, wherein the wavelength is from 8 to 13 µm.

6. The method according to any one of claims 1 to 5, wherein the particles have significantly circular planes facing each other with a diameter of from 5 to 100 µm and a height of from 5 to 100 µm.

7. The method according to any one of claims 1 to 6, wherein the resin powder has a melting point of 100 degrees C or higher as measured according to ISO 3146 standard.

8. The method according to according to any one of claims 1 to 7, wherein the resin powder has a 50 percent cumulative volume particle diameter of from 1 to 200 µm.

9. The method according to according to any one of claims 1 to 8, wherein the solid freeform fabrication object has an arithmetic mean deviations of profiles, Ra, of from 0.5 to 100 µm as measured according to ISO 1302 standard.

10. The method according to any one preceding claim wherein in respect of the laser beams, the difference between the local maximal value and the local minimal value are preferably -40 to +40 present, more preferably -10 to +10 percent, and particularly preferably -5 to +5 percent.

11. The method according to any one preceding claim, wherein the powder includes no less than 50 percent of powder particles having the pillar like form, with the remainder being particles formed by pulverization.

12. The method according to any one preceding claim, wherein the pillar like form particles are particles obtained by extruding the resin material and cutting the extruded material.

13. The method according to any one preceding claim, wherein the ratio of the volume average particle diameter to the number average particle diameter of the resin powder for solid freeform fabrication is 1.5 or less, and preferably 1.2 or less.

## Patentansprüche

1. Verfahren zur Herstellung eines Festkörper-Freiformobjekts, Folgendes beinhaltend:
Bilden einer Schicht aus Harzpulver zum Festkörper-Freiformen, welche Partikel mit einer kissenartigen Form enthält; und
Verfestigen eines besonderen Bereichs der Schicht mit Bestrahlung von Laserstrahlen;
**dadurch gekennzeichnet, dass** die Laserstrahlen eine Energieintensitätsverteilung aufweisen, welche eine hutspitzenartige Form aufweist, und wobei das Verhältnis des volumenmittleren Partikeldurchmessers zum zahlenmittleren Partikeldurchmesser des Harzpulvers zum Festkörper-Freiformen 2,00 oder darunter beträgt, wobei das Verhältnis des volumenmittleren Partikeldurchmessers zum zahlenmittleren Partikeldurchmesser des Harzpulvers zum Festkörper-Freiformen anhand einer Messvorrichtung Microtrac MT3300EXII für die Partikelgrößenverteilung messbar ist.

2. Verfahren nach Anspruch 1, bei welchem die kissenartige Form eine deutlich zylindrische Form ist.

3. Verfahren nach Anspruch 1 oder 2, bei welchem die Laserstrahlen eine Wellenlänge von 1 bis 30 µm aufweisen.

4. Verfahren nach Anspruch 3, bei welchem Wellenlänge zwischen 5 und 20 µm beträgt.

5. Verfahren nach Anspruch 4, bei welchem Wellenlänge zwischen 8 und 13 µm beträgt.

6. Verfahren nach einem der Ansprüche 1 bis 5, bei welchem die Partikel deutlich kreisförmige Ebenen aufweisen, welche einander zugewandt sind, mit einem Durchmesser zwischen 5 und 100 µm und einer Höhe zwischen 5 und 100 µm.

7. Verfahren nach einem der Ansprüche 1 bis 6, bei welchem das Harzpulver einen Schmelzpunkt von 100 Grad C oder darüber aufweist, gemessen entsprechend der Norm ISO 3146.

8. Verfahren nach einem der Ansprüche 1 bis 7, bei welchem das Harzpulver einen kumulativen Volumenanteil von 50 Prozent an Partikeln mit einem Durchmesser von 1 bis 200 µm aufweist.

9. Verfahren nach einem der Ansprüche 1 bis 8, bei welchem das Festkörper-Freiformobjekt eine mittlere mathematische Profilabweichung, Ra, zwischen 0,5 und 100 µm, gemessen entsprechend der Norm ISO 1302, aufweist.

10. Verfahren nach einem der vorhergehenden Ansprüche, bei welchem in Bezug auf die Laserstrahlen die Differenz zwischen dem lokalen Maximalwert und dem lokalen Minimalwert vorzugsweise -40 bis +40 Prozent, noch bevorzugter Weise -10 bis +10 Prozent und besonders bevorzugter Weise -5 bis +5 Prozent beträgt.

11. Verfahren nach einem der vorhergehenden Ansprüche, bei welchem das Pulver nicht weniger als 50 Prozent Pulverpartikel enthält, welche die kissenartige Form aufweisen, wobei der Rest aus Partikeln besteht, welche durch Pulverisieren gebildet wurden.

12. Verfahren nach einem der vorhergehenden Ansprüche, bei welchem die Partikel mit der kissenartigen Form Partikel sind, welche durch Extrudieren des Harzmaterials und Schneiden des extrudierten Materials erzielt werden.

13. Verfahren nach einem der vorhergehenden Ansprüche, bei welchem das Verhältnis des volumenmittleren Partikeldurchmessers zum zahlenmittleren Partikeldurchmesser des Harzpulvers zum Festkörper-Freiformen 1,5 oder darunter und vorzugsweise 1,2 oder darunter beträgt.

## Revendications

1. Procédé de fabrication d'un objet de fabrication de forme libre solide, comprenant :
la formation d'une couche de poudre de résine pour la fabrication de forme libre solide incluant des particules présentant une forme semblable à un pilier ; et
la solidification d'une zone particulière de la couche par l'irradiation de faisceaux laser ;
**caractérisé en ce que** les faisceaux laser présentent une répartition d'intensité énergétique avec une forme supérieure semblable à un chapeau et dans lequel le rapport entre le diamètre moyen de particule en volume et le diamètre moyen de particule en nombre de la poudre de résine pour la fabrication d'une forme libre solide est de 2,00 ou moins, le rapport entre le diamètre moyen de particule en volume et le diamètre moyen de particule en nombre de la poudre en résine pour la fabrication d'une forme libre solide étant mesurable par un dispositif de mesure de la distribution de taille de particules MT3300EXII microtrac.

2. Procédé selon la revendication 1, dans lequel la forme semblable à un pilier est une forme considérablement cylindrique.

3. Procédé selon la revendication 1 ou 2, dans lequel les faisceaux laser présentent une longueur d'onde de 1 à 30 µm.

4. Procédé selon la revendication 3, dans lequel la longueur d'onde est de 5 à 20 µm.

5. Procédé selon la revendication 4, dans lequel la longueur d'onde est de 8 à 13 µm.

6. Procédé selon l'une quelconque des revendications 1 à 5, dans lequel les particules présentent des plans considérablement circulaires orientés les uns face aux autres avec un diamètre de 5 à 100 µm et une hauteur de 5 à 100 µm.

7. Procédé selon l'une quelconque des revendications 1 à 6, dans lequel la poudre de résine présente un point de fusion de 100 degrés C ou plus, comme mesuré selon la norme ISO 3146.

8. Procédé selon l'une quelconque des revendications 1 à 7, dans lequel la poudre de résine présente un diamètre de particule en volume cumulatif de 50 pour cent de 1 à 200 µm.

9. Procédé selon l'une quelconque des revendications 1 à 8, dans lequel l'objet de fabrication de forme libre solide présente des écarts types de moyenne arithmétique de profils, Ra, de 0,5 à 100 µm, tels que mesurés selon la norme ISO 1302.

10. Procédé selon l'une quelconque des revendications précédentes, dans lequel, relativement aux faisceaux laser, la différence entre la valeur maximale locale et la valeur minimale locale est de préférence de -40 à +40 pour cent, de manière davantage préférée de -10 à +10 pour cent, et de manière particulièrement préférée de -5 à +5 pour cent.

11. Procédé selon l'une quelconque des revendications précédentes, dans lequel la poudre inclut pas moins de 50 pour cent de particules de poudre présentant la forme semblable à un pilier, le reste étant des particules formées par pulvérisation.

12. Procédé selon l'une quelconque des revendications précédentes, dans lequel les particules de forme semblable à un pilier sont des particules obtenues en extrudant le matériau de résine et en découpant le matériau extrudé.

13. Procédé selon l'une quelconque des revendications précédentes, dans lequel le rapport entre le diamètre moyen de particule en volume et le diamètre moyen de particule en nombre de la poudre de résine pour la fabrication de forme libre solide est de 1,5 ou moins, et de préférence de 1,2 ou moins.
